# EUROPÄISCHE PATENTSCHRIFT

(11) **EP 3 451 790 B1**
(45) Veröffentlichungstag und Bekanntmachung des Hinweises auf die Patenterteilung: **20.04.2022**
(21) Anmeldenummer: 18190276.8
(22) Anmeldetag: 22.08.2018
(51) Int. Cl.: H05B 3/14, H05B 3/84, B60R 11/04, G03B 11/04, G03B 17/55

(54) **VORRICHTUNG MIT BEHEIZBARER STREULICHTBLENDE**
DEVICE WITH HEATED LIGHT SCATTERING APERTURE
DISPOSITIF POURVU D'ÉCRAN ANTI-LUMIÈRE DIFFUSÉE CHAUFFABLE

(30) Priorität: 29.08.2017 DE 102017008099
(43) Veröffentlichungstag der Anmeldung: 06.03.2019
(73) Patentinhaber: Eichenauer Heizelemente GmbH & Co. KG, 76870 Kandel (DE)
(72) Erfinder: Schlachter, Ulrich, 76863 Herxheim (DE); Maas, Andreas, 76877 Offenbach (DE)
(74) Vertreter: Twelmeier Mommer & Partner

(56) Entgegenhaltungen:
- EP-A1- 1 921 896
- EP-A1- 3 193 561
- WO-A1-2016/105674
- DE-A1-102014 006 923
- GB-A- 2 033 709

## Beschreibung

Die vorliegende Erfindung betrifft eine Vorrichtung für ein Bilderfassungsgerät in einem Kraftfahrzeug mit einer beheizbaren Streulichtblende. Eine Vorrichtung mit den im Oberbegriff des Anspruchs 1 angegebenen Merkmalen ist aus DE 10 2014 006 923 A1 bekannt.

Moderne Kraftfahrzeuge werden zunehmend mit Assistenz- und Sicherheitssystemen ausgestattet, welche Daten von Bilderfassungseinheiten, wie beispielsweise Kameras, auswerten. Ein Problem ergibt sich, wenn, beispielsweise durch Beschlagen, Reifbildung oder Einfrieren eines Sichtfensters der Bilderfassungseinheit oder auch einer Linse, eine Bilderfassung durch die Bilderfassungseinheit erschwert wird.

Aus der EP 2 644 005 B1 ist daher bekannt, die Streulichtblende mit einer Heizfolie zu versehen, die auf die Streulichtblende aufgeklebt ist. Nachteilig ist dabei jedoch der hohe Fertigungsaufwand und die unbefriedigend lange Aufheizzeit.

Aufgabe ist es daher, eine einfacher zu fertigende Art zur Beheizung der Streulichtblende zu entwickeln, die darüber hinaus eine kurze Aufheizzeit hat.

Die Aufgabe wird mit einer Vorrichtung gemäß Anspruch 1 gelöst. Vorteilhafte Weiterbildungen der Erfindung sind Gegenstand von Unteransprüchen.

Eine erfindungsgemäße Vorrichtung kann hinter einer Fahrzeugscheibe angeordnet sein, so dass sie vor Umgebungseinflüssen weitgehend geschützt ist. Allerdings kann die Vorrichtung dennoch Feuchtigkeit ausgesetzt sein, die sich bei tiefen Temperaturen niederschlagen oder sogar zu einer Frost- oder Eisschicht führen kann. Bevorzugt ist die Vorrichtung hinter der Windschutzscheibe oder der Heckscheibe angeordnet. Die Fahrzeugscheibe kann aber beispielsweise auch die transparente Abdeckung eines Fahrzeugscheinwerfers oder einer anderen Fahrzeugkomponente sein oder ausschließlich dem Schutz eines Bilderfassungsgeräts dienen.

Bevorzugt weist das Heizelement nur einen keramischen PTC-Baustein auf, denkbar sind aber auch mehrere PTC-Bausteine. Das Heizelement weist weiterhin erfindungsgemäß an der Unter- und Oberseite des mindestens einen PTC-Bausteins ein metallisches Kontaktteil auf, das flächig und gut wärmeleitend in einem Kontaktabschnitt mit dem PTC-Baustein verbunden ist.

Vorteilhaft haben keramische PTC-Bausteine im Arbeitsbereich eine steil ansteigende Temperatur-Widerstandskennlinie. So fließt nach dem Einschalten zunächst ein hoher Strom, der schnell zum Aufheizen der Streulichtblende führt. Nach Erreichen der Solltemperatur wird ein PTC-Baustein hochohmig und regelt sich damit selbst ab. Eine zusätzliche Temperaturüberwachung ist daher vorteilhaft nicht erforderlich. Dagegen werden metallische Heizleiter, selbst wenn sie ebenfalls eine positive Temperaturcharakteristik haben, nur allmählich hochohmig, wodurch eine schnelle Aufheizung und eine Temperaturüberwachung nicht in gleichem Maße gegeben sind.

Bei Heizfolien nach dem Stand der Technik ist es andererseits möglich, die Heizleiterbahnen gleichmäßig über die gesamte Unterseite der Streublende zu verteilen, sodass alle Bereiche der Blende auch gleichmäßig erwärmt werden können.

Überraschend hat sich aber gezeigt, dass die konzentrierte Wärme, die ein PTC-Baustein erzeugt, nicht nachteilig für die Wärmeübertragung auf die Streulichtblende und damit für die erreichbare Temperatur oberhalb der Streulichtblende ist. Um die Wärmeübertragung noch weiter zu verbessern ist weiterhin auch ein Verkleben einzelner oder aller Teile des Heizelementes mit der Streulichtblende denkbar.

Durch eine Wärmeverteilplatte kann die Wärmeübertragung des Heizelementes noch zusätzlich verbessert werden. Vorteilhaft ist dabei das blendennahe obere Kontaktteil des Heizelementes als Wärmeverteilplatte ausgebildet, die eine deutlich größere Fläche als der PTC-Baustein hat, insbesondere über 2/3 der Streulichtblendenoberfläche aufweist. Äußerst vorteilhaft ist dabei die Wärmeverteilplatte aus einem gut wärmeleitenden Metall wie Aluminium oder Kupfer hergestellt. Denkbar ist aber auch, dass das Heizelement eine zusätzliche Wärmeverteilplatte zwischen dem Kontaktteil und der Streulichtblende aufweist.

Erfindungsgemäß weist zumindest ein Kontaktteil, bevorzugt beide Kontaktteile, einstückig mit dem Kontaktabschnitt ausgebildete Anschlussabschnitte auf, über die das Heizelement elektrisch kontaktiert wird. Äußerst bevorzugt ist dabei mindestens ein Ende eines Anschlussabschnittes als Steckerpin ausgestaltet.

Dies ermöglicht eine sehr viel einfachere Kontaktierung als z. B. bei der Ausbildung des Heizelementes als Heizfolie, da die vorderen Anschlussabschnitte dann direkt als Steckanschluss benutzt werden können. Bei einer vorteilhaften Ausgestaltung sind die Anschlussabschnitte weiterhin in ein Steckergehäuse eingespritzt oder eingesteckt. Äußerst vorteilhaft ist das Steckergehäuse direkt an der Streulichtblende z.B. durch Formschluss befestigt, insbesondere eingeklipst. Denkbar ist es aber auch, die Streulichtblende und das Steckergehäuse einstückig auszuführen, z.B. indem die Steckerpins durch Durchbrüche im Gehäuse lediglich hindurchgesteckt oder auch eingeklebt werden.

Die Befestigung des Heizelementes an der Streulichtblende kann über Ansätze erfolgen, die an der Streulichtblende ausgebildet sind. Dabei sind verschiedene Varianten denkbar. Bei einer Möglichkeit sind an der Streulichtblende schienenartige Ansätze ausgebildet, in die das Heizelement klemmend eingeschoben werden kann.

Bei einer anderen Ausgestaltungsvariante ist das Heizelement in einer Tasche angeordnet, die bevorzugt einstückig mit der Streulichtblende ausgebildet ist. Vorteilhaft kann das Heizelement so vor unbeabsichtigtem elektrischen Kontakt geschützt werden, so dass die Gefahr eines Kurzschlusses reduziert ist.

Bei einer anderen Ausgestaltungsvariante durchgreifen an der Streulichtblende angeformte Stifte zumindest das der Streulichtblende abgewandte untere Kontaktteil. Unter dem unteren Kontaktteil sind die Stifte dann heiß verprägt. Die Stifte sind darüber hinaus bevorzugt am Umfang des PTC-Bausteines angeordnet und fixieren diesen dadurch in seiner Lage. Hierdurch entfallen vorteilhaft weitere Montagehilfen. Bei einer dritten Befestigungsmöglichkeit ist das Heizelement an Ansätzen der Streulichtblende angeklipst.

Zur Erzeugung einer Vorspannung zwischen den Ansätzen der Streulichtblende und dem Heizelement kann mindestens ein Kontaktteil des Heizelementes als Federelement ausgestaltet sein. Insbesondere kann die Vorspannung durch eine konkave bzw. konvexe Form oder auch Wellenform des Kontaktteiles erzeugt sein. Denkbar sind auch aus der Fläche herausgebogene Federlaschen oder ein zusätzliches Federelement.

Bei allen Varianten kann das Heizelement zunächst stoffschlüssig als handhabbare Einheit hergestellt sein. Die Einheit kann z.B. stoffschlüssig, insbesondere durch Verkleben von PTC-Baustein und Kontaktteilen, hergestellt sein. Des Weiteren kann die Einheit auch formschlüssig, z.B. durch Verklipsen, insbesondere mit einem zusätzlichen Halterahmen, hergestellt sein.

Eine vorteilhafte Weiterbildung der Erfindung sieht vor, dass die Streulichtblende aus einem Verbundwerkstoff ist, der aus Kunststoff und anorganischen Partikeln gebildet ist, die in dem Kunststoff eingebettet sind. Der Verbundwerkstoff kann beispielsweise ein Matrixverbundwerkstoff sein, bei dem der Kunststoff eine Matrix bildet, in der die anorganischen Partikel eingebettet sind. Die anorganischen Partikel haben bevorzugt eine höhere Wärmeleitfähigkeit als der sie umgebende Kunststoff, so dass die Wärmeleitfähigkeit vorteilhaft erhöht ist. Bei den anorganischen Partikeln kann es sich beispielsweise um Kohlenstoffpartikel, beispielsweise Ruß- oder Graphitpartikel, oder um Metallpartikel handeln. Bevorzugt haben die anorganischen Partikel eine Wärmeleitfähigkeit, die wenigstens das Zehnfache, besonders bevorzugt wenigstens das Hundertfache der Wärmeleitfähigkeit des sie umgebenden Kunststoffs beträgt.

Durch Verwendung eines solchen Verbundwerkstoffs kann vorteilhaft eine Streulichtblende geschaffen werden, die einerseits ein elektrischer Isolator ist und somit einen Kurzschluss zwischen Komponenten des Heizelements verhindert und andererseits durch ihre gute Wärmeleitfähigkeit eine effiziente Ableitung der von dem Heizelement erzeugten Wärme ermöglicht.

Weitere Einzelheiten und Vorteile der Erfindung werden an Ausführungsbeispielen unter Bezugnahme auf die beigefügten Zeichnungen erläutert. Gleiche und einander entsprechende Komponenten sind darin mit übereinstimmenden Bezugszeichen bezeichnet. Es zeigen:
- Fig. 1: eine schematische Darstellung der Vorrichtung mit Fahrzeugscheibe, Bilderfassungsgerät und beheizter Streulichtblende,
- Fig. 2: eine Streulichtblende mit Heizelement und Steckergehäuse,
- Fig. 3: die Streulichtblende mit Heizelement ohne Steckergehäuse,
- Fig. 4a, 4b: eine weitere Ausgestaltungsvariante mit verprägten Befestigungsstiften in unterschiedlicher Perspektive,
- Fig. 5a, 5b: eine weitere Ausgestaltungsvariante mit eingeschobenem Heizelement in unterschiedlicher Perspektive, und
- Fig. 6a, 6b: eine weitere Ausgestaltungsvariante mit eingeschobenem Heizelement in unterschiedlicher Perspektive.

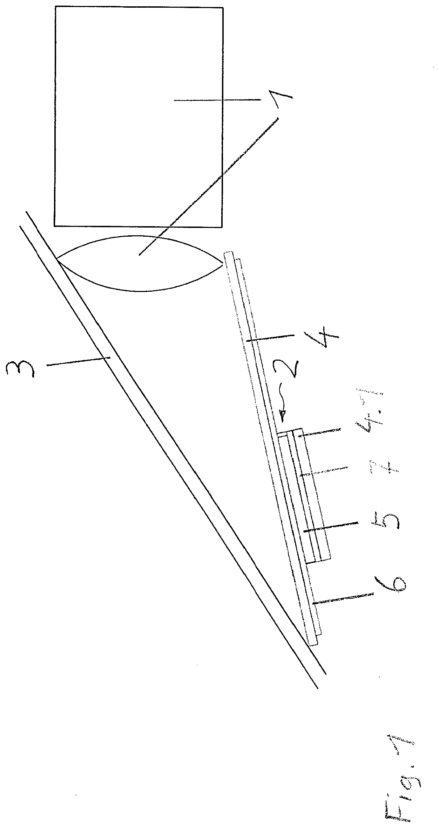

In Fig. 1 ist ein Bilderfassungsgerät mit Linse 1 und eine Streulichtblende 4 hinter einer Fahrzeugscheibe 3 angeordnet. Die Streulichtblende 4 schirmt den Raum zwischen Scheibe 3 und Bilderfassungsgerät 1 gegen unerwünschtes Streulicht ab. Ist darüber hinaus die Streulichtblende 4 beheizt, kann dadurch die Luft zwischen der Scheibe 3 und dem Bilderfassungsgerät 1 erwärmt werden. Ein Beschlagen oder Vereisen der Scheibe 3 im Erfassungsbereich des Bilderfassungsgerätes 1 oder auch der Linse kann dadurch verhindert oder beseitigt werden.

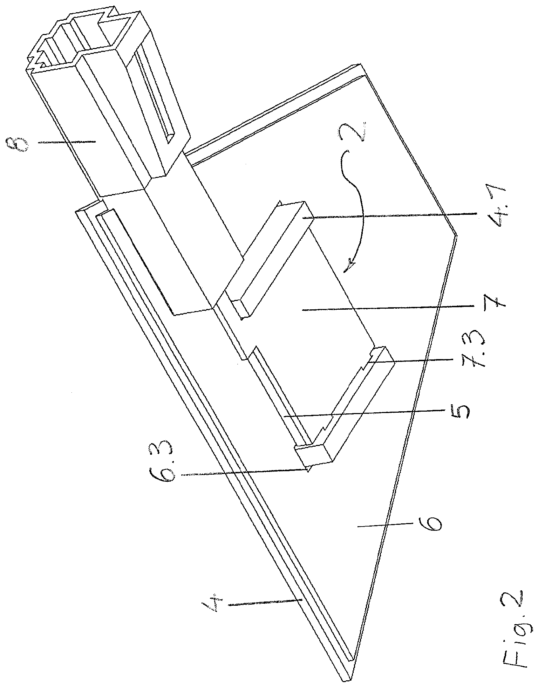

In Fig. 2 ist die Streulichtblende 4 mit darunter angeordnetem Heizelement 2 dargestellt. Das Heizelement 2 besteht im Wesentlichen aus dem keramischen PTC-Baustein 5 und den Kontaktteilen 6 und 7, die an den gegenüberliegenden Kontaktflächen des PTC-Bausteines 5 angeordnet sind. Anstelle des einen PTC-Bausteines 5 können aber auch mehrere Bausteine angeordnet sein. Die Kontaktteile 6, 7 sind hier als Kontaktbleche ausgeführt. Andere Arten, z.B. Kontaktprofile, sind aber ebenso denkbar. Das an der Streulichtblende 4 anliegende obere Kontaktblech 6 ist annähernd der Kontur der Streulichtblende 4 nachempfunden und steht so fast mit der gesamten Unterseite der Streulichtblende 4 in wärmeleitendem Kontakt. Obwohl die Streulichtblende 4 aus einem eher schlecht wärmeleitenden Kunststoff hergestellt sein kann, wird die Wärme ausreichend gut auf die Oberseite der Streulichtblende 4 geleitet und die Luft über der Streulichtblende 4 wird soweit erwärmt, dass ein Beschlagen oder Vereisen der Scheibe 3 verhindert bzw. rasch beseitigt werden kann.

Zur Befestigung des Heizelementes 2 an der Streulichtblende 4 weist diese Befestigungsansätze auf. Im Falle der Fig. 2 sind dies zwei stegartige Erhebungen 4.1. Dabei durchgreifen die stegartigen Erhebungen 4.1 Durchbrüche 6.3 im oberen Kontaktblech 6. Gleichzeitig fixieren sie den PTC-Baustein 5 zwischen sich. An den einander gegenüberliegenden Innenseiten weisen sie Einschnitte auf, in die vorstehende Laschen 7.3 am Kontaktblech 7 eingeklipst sind. Die Klipsverbindung ist dabei derart beschaffen, dass eine Vorspannung des Heizelementes 2 in Richtung auf die Streulichtblende 4 erzeugt wird. In dieser beispielhaften Ausführung sind dafür die Kontaktbleche 6, 7 aus einem federharten Material jeweils von der PTC-Bausteinseite gesehen konvex vorgeformt, sodass der randseitige Andruck eine Vorspannung erzeugt. Andere Ausgestaltungen zur Erzeugung einer Vorspannung sind aber ebenso denkbar. Beispielsweise kann dazu ein separates Federelement vorgesehen sein.

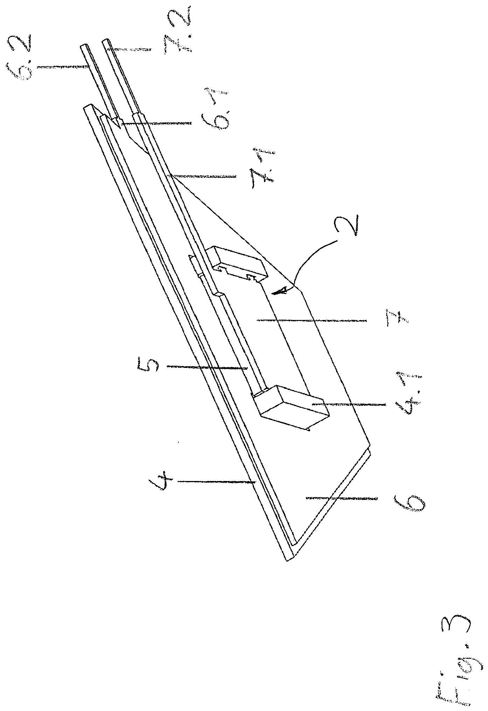

In der beispielhaften Ausführung weisen beide Kontaktbleche 6, 7 Anschlussabschnitte 6.1 und 7.1 auf, die im vorderen Bereich als Steckerpins 6.2 und 7.2 ausgestaltet sind. Dies ist insbesondere in Fig. 3 dargestellt, die das Heizelement 2 mit Streulichtblende 4 ohne Steckergehäuse 8 zeigt. Tatsächlich sind die Anschlussabschnitte 6.1 und 7.1 aber gemäß Fig. 2 zumindest teilweise in ein Steckergehäuse 8 eingespritzt. Somit kann vorteilhaft auf weitere Bauteile zur Kontaktierung verzichtet werden. Im Ausführungsbeispiel ist das Steckergehäuse durch Formschluss an der Streulichtblende 4 befestigt, z.B. durch Anklipsen. Dadurch ist eine sehr einfache Art der elektrischen Kontaktierung mit wenigen Bauteilen hergestellt.

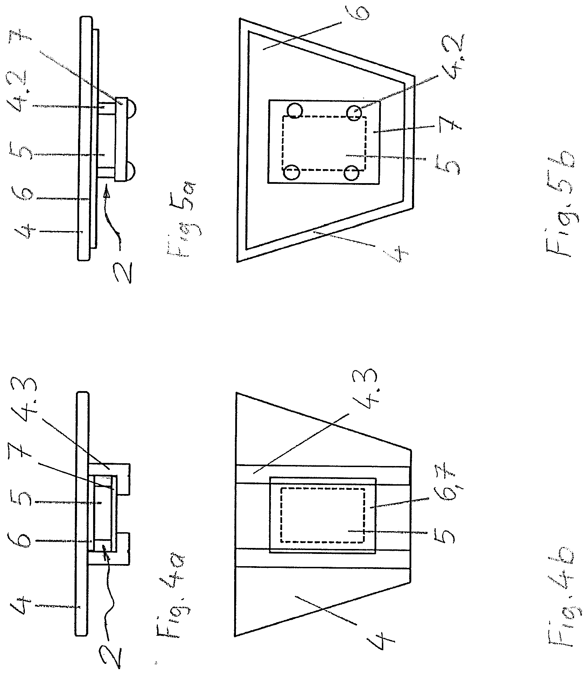

In Fig. 4a und 4b ist eine alternative Befestigung des Heizelementes 2 an der Streulichtblende 4 gezeigt. Dabei sind die Ansätze an der Streulichtblende 4 als durchgehende parallele Stege 4.3 ausgeführt, deren endseitiger Abstand a geringer als die Breite der Kontaktbleche 6, 7 ist. Der übrige Abstand dagegen hat mindestens die Breite der Kontaktbleche 6, 7, wobei hier die Kontaktbleche 6, 7 in etwa die gleiche Größe aufweisen. Dadurch ist das seitlich eingeschobene Heizelement 2 fixiert. Auch bei dieser Ausführung wird ein Anpressdruck durch die federnde Ausgestaltung eines oder beider Kontaktbleche 6, 7 erreicht.

Eine weitere Befestigungsvariante ist in Fig. 5a, 5b dargestellt. Dazu weist die Streulichtblende 4 vorstehende Stifte 4.2 auf, die durch Durchbrüche im Kontaktblech 6 ragen. Die Stifte 4.2 sind dabei so angeordnet, dass sie den PTC-Baustein 5 zwischen sich aufnehmen und fixieren. Dazu können die Stifte auch in anderer Anordnung oder in anderer Anzahl als hier gezeigt vorhanden sein. Das Kontaktblech 7 darunter weist ebenfalls mit den anderen Durchbrüchen fluchtende Durchbrüche auf, die die Stifte 4.2 durchragen. Unterhalb des Kontaktbleches 7 sind die Stifte heiß verprägt und fixieren derart das gesamte Heizelement 2. Auch hier können beide oder zumindest ein Kontaktblech 6, 7 als Federelement ausgestaltet sein, um eine Vorspannung in Richtung auf die Streulichtblende 4 zu erzeugen.

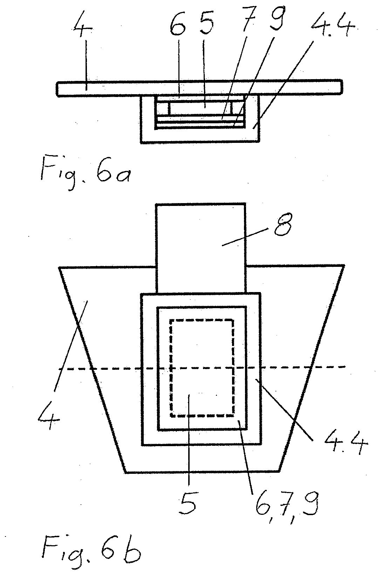

Eine weitere Befestigungsvariante ist in Fig. 6a, 6b dargestellt. Diese Variante ähnelt der Variante von Fig. 4a, 4b, wobei die Streulichtblende 4 eine Tasche 4.4 bildet, in der das Heizelement 2 angeordnet ist. Die Streulichtblende 4 bildet also nicht nur Stege, sondern auch Boden und Decke. Die Streulichtblende 4 kann so eine Tasche 4.4 mit zwei parallel Seitenwände sowie Boden und Decke bilden. Die von der Streulichtblende 4 gebildete Tasche 4.4 kann zusätzlich auch eine Rückwand aufweisen, die quer zu den beiden parallelen Seitenwänden verläuft, wie z.B. in Fig. 6b dargestellt. Bei dem dargestellten Ausführungsbeispiel ist die Tasche 4.4 von einem Steckergehäuse 8 verschlossen. Das Heizelement 2 ist so allseitig umschlossen.

Das Steckergehäuse 8 ist bevorzugt mit der Streulichtblende 4, äußerst bevorzugt mit Wänden der Tasche 4.4, verrastet oder verklipst. Beispielsweise kann das Steckergehäuse 8 Rasthaken aufweisen, die in passende Aussparungen der Streulichtblende 4 bzw. von Seitenwänden der Tasche 4.4 eingreifen, oder umgekehrt greifen Rasthaken an der Streulichtblende in Aussparungen des Steckergehäuses. Als Alternative oder zusätzlich zu einer Rastverbindung kann das Steckergehäuse 8 auch stoffschlüssig mit der Streulichtblende 4 verbunden sein, beispielsweise verklebt.

Die Steckeranschlüsse können in das Steckergehäuse 8 eingespritzt sein. Die Steckeranschlüsse können dabei von Anschlussabschnitten 6.1, 7.1 von Kontaktteilen 6, 7, z.B. Blechen, ausgebildet sein, zwischen denen der PTC-Baustein 5 des Heizelements 2 angeordnet ist.

Vorteilhaft können das Steckergehäuse 8 und das Heizelement 2 so eine vormontierte, gut handhabbare Einheit bilden, die dann in die Tasche 4.4 gesteckt wird.

In der Tasche 4.4 kann ein Federelement 8 angeordnet sein, beispielsweise ein Federblech, das Druck auf das PTC-Bauteil 5 ausübt. Beispielsweise kann das Federelement 9 zwischen der Decke der Tasche 4.4 und einem der Kontaktteile 7 angeordnet sein. Das Federelement 9 übt den Druck auf das PTC-Bauteil 5 dann über das Kontaktteil 7 aus, welches an dem Federelement 9 anliegt. Das Federelement 9 bewirkt somit einen guten Wärmekontakt zwischen dem Heizelement 2 und der Streulichtblende 4.

Die Streulichtblende 4 kann aus einem Verbundwerkstoff gefertigt sein, der eine Matrixphase aus Kunststoff und anorganische Partikel, die in die Matrixphase eingebettet sind, aufweist. Als anorganische Partikel können beispielsweise Kohlenstoffpartikel, z.B. Ruß- oder Graphitpartikel, oder Metallpartikel verwendet werden. Auf diese Weise lässt sich die Wärmeleitfähigkeit der Streulichtblende 4 deutlich erhöhen und die Streulichtblende 4 trotzdem als elektrischer Isolator ausbilden.

### Bezugszeichenliste

- 1: Bilderfassungsgerät
- 2: Heizelement
- 3: Fahrzeugscheibe
- 4: Streulichtblende
- 4.1: Erhebungen
- 4.2: Stifte
- 4.3: Stege
- 4.4: Tasche
- 5: PTC-Baustein
- 6: Kontaktteil
- 6.1: Anschlussabschnitt
- 6.2: Steckerpin
- 6.3: Durchbrüche
- 7: Kontaktteil
- 7.1: Anschlussabschnitt
- 7.2: Steckerpin
- 7.3: Laschen
- 8: Steckergehäuse
- 9: Federelement

## Patentansprüche

1. Vorrichtung für ein Bilderfassungsgerät (1) in oder an einem Fahrzeug, umfassend wenigstens eine Streulichtblende (4) und ein Heizelement (2), das wärmeleitend an der Streulichtblende (4) angeordnet ist, **dadurch gekennzeichnet, dass** das Heizelement (2) mindestens einen keramischen PTC-Baustein (5) aufweist und metallische Kontaktteile (6, 7) an einer Unterseite und einer Oberseite des PTC-Bausteins (5) angeordnet sind, wobei mindestens ein Kontaktteil (6, 7) des Heizelementes (2) einen einstückig damit ausgebildeten Anschlussabschnitt (6.1, 7.1) aufweist, über den das Heizelement (2) elektrisch kontaktiert wird, und
mindestens ein Anschlussabschnitt (6.1, 7.1) von einem Steckergehäuse (8) umgeben ist, das an der Streulichtblende (4) befestigt ist.

2. Vorrichtung nach Anspruch 1, **dadurch gekennzeichnet, dass** an der Streulichtblende (4) Ansätze (4.1, 4.2, 4.3, 4.4) ausgebildet sind, an denen das Heizelement (2) befestigt ist.

3. Vorrichtung nach einem der vorangegangenen Ansprüche, **dadurch gekennzeichnet, dass** das Heizelement (2) ein an der Streulichtblende (4) anliegendes Kontaktteil (6) aufweist, das eine Fläche hat, die über 2/3, insbesondere über 3/4 so groß wie die Fläche der Streulichtblende (4) ist.

4. Vorrichtung nach einem der vorstehenden Ansprüche, **dadurch gekennzeichnet, dass** beide Anschlussabschnitte (6.1, 7.1) der Kontaktteile, von einem Steckergehäuse (8) umgeben sind, das an der Streulichtblende (4) befestigt ist.

5. Vorrichtung nach einem der vorstehenden Ansprüche, **dadurch gekennzeichnet, dass** die Enden (6.2, 7.2) der Anschlussabschnitte (6.1, 7.1) als Steckerpins ausgestaltet sind.

6. Vorrichtung nach einem der vorstehenden Ansprüche, **dadurch gekennzeichnet, dass** das Steckergehäuse (8) an der Streulichtblende (4) durch eine Rast- oder Klipsverbindung befestigt ist.

7. Vorrichtung nach einem der vorstehenden Ansprüche, **dadurch gekennzeichnet, dass** das Steckergehäuse (8) und das Heizelement (2) zusammen eine vormontierte Baugruppe bilden.

8. Vorrichtung nach einem der vorangegangenen Ansprüche, **dadurch gekennzeichnet, dass** eine oder beide Kontaktteile (6, 7) als Federelemente ausgebildet sind, die das Heizelement (2) unter Vorspannung an die Streulichtblende (4) anpressen.

9. Vorrichtung nach einem der vorangegangenen Ansprüche, **dadurch gekennzeichnet, dass** die Streulichtblende (4) eine Tasche (4.4) bildet, in der das Heizelement (2) sitzt.

10. Vorrichtung nach Anspruch 9, **dadurch gekennzeichnet, dass** die Tasche (4.4) durch ein Steckergehäuse (8) verschlossen ist.

11. Vorrichtung nach Anspruch 8 oder 10, **dadurch gekennzeichnet, dass** in der Tasche (4.4.), zwei Kontaktteile (6, 7) und ein Federelement (9), vorzugsweise ein Federblech, angeordnet sind.

12. Vorrichtung nach einem der vorangegangenen Ansprüche, **dadurch gekennzeichnet, dass** die Streulichtblende (4) aus einem Verbundwerkstoff ist, der aus einem Kunststoff und darin eingelagerten anorganischen Partikeln gebildet ist.

13. Vorrichtung nach Anspruch 12, **dadurch gekennzeichnet, dass** die anorganischen Partikel Kohlenstoffpartikel, vorzugsweise Ruß- oder Graphitpartikel, sind.

14. Vorrichtung nach einem der Ansprüche 12 oder 13, **dadurch gekennzeichnet, dass** die anorganischen Partikel eine höhere Wärmeleitfähigkeit als der sie umgebende Kunststoff haben, vorzugsweise eine mindestens zehn Mal so hohe Wärmeleitfähigkeit haben, besonders bevorzugt eine mindestens hundert Mal so hohe Wärmeleitfähigkeit haben.

## Claims

1. Apparatus for an imaging device (1) in or on a vehicle comprising at least one lens hood (4) and a heating element (2) which is arranged on the lens hood (4) in a thermally conductive manner, **characterized in that** the heating element (2) has at least one ceramic PTC element (5) and that metallic contacting parts (6, 7) are arranged on a bottom side and a top side of the PTC element (5), wherein at least one contacting part (6, 7) of the heating element (2) has a connection portion (6.1, 7.1) integrally designed with the same, via which connection portion (6.1, 7.1) the heating element (2) is electrically contacted, and at least one connection portion (6.1, 7.1) is surrounded by a connector housing (8) attached to the lens hood (4).

2. Apparatus according to claim 1, **characterized in that** lugs (4.1, 4.2, 4.3, 4.4), to which the heating element (2) is attached, are designed on the lens hood (4).

3. Apparatus according to any one of the preceding claims, **characterized in that** the heating element (2) has a contacting part (6) resting closely against the lens hood (4), which contacting part (6) has a surface that is more than 2/3, in particular more than 3/4, the size of the surface of the lens hood (4).

4. Apparatus according to any one of the preceding claims, **characterized in that** both connection portions (6.1, 7.1) of the contacting parts are surrounded by a connector housing (8) which is attached to the lens hood (4).

5. Apparatus according to any one of the preceding claims, **characterized in that** the ends (6.2, 7.2) of the connection portions (6.1, 7.1) are designed as connector pins.

6. Apparatus according to any one of the preceding claims, **characterized in that** the connector housing (8) is attached to the lens hood (4) by a latching or snapping connection.

7. Apparatus according to any one of the preceding claims, **characterized in that** the connector housing (8) and the heating element (2) together form a prefabricated assembly.

8. Apparatus according to any one of the preceding claims, **characterized in that** one or both contacting parts (6, 7) are formed as spring elements which press the heating element (2) against the lens hood (4) under preload.

9. Apparatus according to any one of the preceding claims, **characterized in that** the lens hood (4) forms a pocket (4.4) in which the heating element (2) is positioned.

10. Apparatus according to claim 9, **characterized in that** the pocket (4.4) is closed by a connector housing (8).

11. Apparatus according to claim 8 or 10, **characterized in that** two contacting parts (6, 7) and a spring element (9), preferably a spring plate, are arranged in the pocket (4.4.).

12. Apparatus according to any one of the preceding claims, **characterized in that** the lens hood (4) is made of a composite material formed from a plastic and inorganic particles embedded in the same.

13. Apparatus according to claim 12, **characterized in that** the inorganic particles are carbon particles, preferably soot or graphite particles.

14. Apparatus according to any one of claims 12 or 13, **characterized in that** the inorganic particles have a higher thermal conductivity than does the plastic surrounding them, preferably a thermal conductivity at least ten times as high, particularly preferably a thermal conductivity at least 100 times as high.

## Revendications

1. Dispositif pour un dispositif d'acquisition d'images (1) dans ou sur un véhicule, comprenant au moins un pare-soleil (4) et un élément chauffant (2), qui est disposé de manière thermoconductrice sur le pare-soleil (4), **caractérisé en ce que** l'élément chauffant (2) présente au moins un composant PTC céramique (5) et des pièces de contact métalliques (6, 7) sont disposées sur un côté inférieur et un côté supérieur du composant PTC (5), dans lequel au moins une pièce de contact (6, 7) de l'élément chauffant (2) présente une section de connexion (6.1, 7.1) formée en un seul tenant avec celle-ci, via laquelle l'élément chauffant (2) est contacté électriquement, et au moins une section de connexion (6.1, 7.1) est entourée par un boîtier de fiche (8) qui est fixé au pare-soleil (4).

2. Dispositif selon la revendication 1, **caractérisé en ce que** sur le pare-soleil (4) sont formées des saillies (4.1, 4.2, 4.3, 4.4) auxquelles l'élément chauffant (2) est fixé.

3. Dispositif selon une des revendications précédentes, **caractérisé en ce que** l'élément chauffant (2) présente une pièce de contact (6), reposant contre le pare-soleil (4), qui a une surface qui est supérieure aux 2/3, en particulier supérieure aux 3/4 de la surface de le pare-soleil (4).

4. Dispositif selon une des revendications précédentes, **caractérisé en ce que** les deux sections de connexion (6.1, 7.1) des pièces de contact sont entourées par un boîtier de fiche (8) qui est fixé au pare-soleil (4).

5. Dispositif selon une des revendications précédentes, **caractérisé en ce que** les extrémités (6.2, 7.2) des sections de connexion (6.1, 7.1) sont configurées en broches de connecteur.

6. Dispositif selon une des revendications précédentes, **caractérisé en ce que** le boîtier de fiche (8) est fixé sur le pare-soleil (4) par une liaison par encliquetage ou par clip.

7. Dispositif selon une des revendications précédentes, **caractérisé en ce que** le boîtier de fiche (8) et l'élément chauffant (2) forment conjointement un ensemble préassemblé.

8. Dispositif selon une des revendications précédentes, **caractérisé en ce qu'**une ou les deux pièces de contact (6, 7) sont réalisées sous forme d'éléments à ressort, qui pressent l'élément chauffant (2) sous tension sur le pare-soleil (4).

9. Dispositif selon une des revendications précédentes, **caractérisé en ce que** le pare-soleil (4) forme une poche (4.4), dans laquelle l'élément chauffant (2) est logé.

10. Dispositif selon la revendication 9, **caractérisé en ce que** la poche (4.4) est fermée par un boîtier de fiche (8).

11. Dispositif selon la revendication 8 ou 10, **caractérisé en ce que** dans la poche (4.4.), deux pièces de contact (6, 7) et un élément de ressort (9), de préférence une lame de ressort, sont disposés.

12. Dispositif selon une des revendications précédentes, **caractérisé en ce que** le pare-soleil (4) est réalisé en un matériau composite, qui est formé d'un plastique et de particules inorganiques incrustées dans celui-ci.

13. Dispositif selon la revendication 12, **caractérisé en ce que** les particules inorganiques sont des particules de carbone, de préférence du noir de carbone ou des particules de graphite.

14. Dispositif selon une des revendications 12 ou 13, **caractérisé en ce que** les particules inorganiques ont une conductivité thermique plus élevée que la matière plastique qui les entoure, de préférence au moins dix fois plus élevée, de manière particulièrement préférée ont une conductivité thermique au moins cent fois supérieure.
